# EUROPEAN PATENT APPLICATION

(11) **EP 4 047 536 A1**
(43) Date of publication of application: **24.08.2022**
(21) Application number: 22152569.4
(22) Date of filing: 20.01.2022
(51) Int. Cl.: G06Q 20/32, G07G 1/00

(54) **MOBILE TERMINAL, INFORMATION PROCESSING DEVICE, AND CONTROL PROGRAM**

(30) Priority: 18.02.2021 JP 2021024415
(71) Applicant: Toshiba TEC Kabushiki Kaisha, Tokyo 141-8562 (JP)
(72) Inventor: Sugita, Nobuhiro, Shinagawa-ku, Tokyo 141-8562 (JP); Yamada, Kuniyoshi, Shinagawa-ku, Tokyo 141-8562 (JP); Komiyama, Hikaru, Shinagawa-ku, Tokyo 141-8562 (JP); Miyazaki, Jun, Shinagawa-ku, Tokyo 141-8562 (JP); Fukuda, Masashi, Shinagawa-ku, Tokyo 141-8562 (JP)
(74) Representative: Bandpay & Greuter

(57) **Abstract**

In one embodiment, a mobile terminal includes a camera and a processor. The camera is configured to read a code symbol on an item. The processor is configured to display a first screen with a first button that causes, when selected by a user, a transition to a second screen for registering an item using the camera to read with a code symbol on the item and a second button that causes, when selected by the user, a transition to a third screen for registering an item without a code symbol, the third screen including a selectable merchandise list. The processor is also configured to output data corresponding to items registered via the second screen and the third screen to a merchandise registration processing device.

## Description

### FIELD

Embodiments described herein relate generally to a mobile terminal, an information processing device, and a control program.

### BACKGROUND

A so-called self-merchandise registration system allows a consumer to scan a barcode on an item of merchandise by using a camera function of a mobile terminal, such as a smartphone, for permitting the consumer to purchase the item at a sales site, such as a retail store or the like. By introducing such a self-merchandise registration system at supermarkets or the like where the sales floor is separate or distinct from checkout stations, product scanning at a checkout station, that is, the merchandise registration operation is not separately required, so that there is an advantage that congestion at the checkout stations can be reduced.

However, not all types of merchandise have barcodes affixed thereto. For example, in some cases, fruits, vegetables, or the like sold as individual pieces may lack barcodes. If a consumer attempts to register an item without a barcode by using a mobile terminal, a method of inputting a merchandise code (that would otherwise be encoded in a barcode) by use of a numerical keypad or the like could potentially be used. However, with such a merchandise code input method, an input error is likely to occur to often. In addition, the burden on the consumers is heavy with such a manual input method. For this reason, it is desirable to provide a self-merchandise registration system that can more easily register items lacking an attached barcode by using a mobile terminal.

### BRIEF DESCRIPTION OF THE DRAWINGS

FIG. 1 depicts a self-merchandise registration system according to an embodiment.
FIG. 2 is a block diagram of a mobile terminal.
FIG. 3 is a block diagram of a virtual POS server.
FIG. 4 is a schematic diagram illustrating a data structure of a transaction file.
FIG. 5 is a flowchart illustrating a procedure executed by a processor of a mobile terminal according to a self-registration program.
FIG. 6 is a flowchart illustrating a procedure of a first registration support process executed by a processor of a mobile terminal according to a self-registration program.
FIG. 7 is a flowchart illustrating a procedure of a second registration support process executed by a processor of a mobile terminal according to a self-registration program.
FIG. 8 is a flowchart illustrating a procedure of a quantity change process executed by a processor of the mobile terminal according to a self-registration program.
FIG. 9 is a flowchart illustrating a procedure of a settlement support process executed by a processor of a mobile terminal according to a self-registration program.
FIG. 10 is a flowchart illustrating a procedure of a check-in notification process executed by a processor of a virtual POS server according to a registration control program.
FIG. 11 is a flowchart illustrating a procedure of a scanning notification process executed by a processor of a virtual POS server according to a registration control program.
FIG. 12 is a flowchart illustrating a procedure of a no-barcode notification process executed by a processor of a virtual POS server according to a registration control program.
FIG. 13 is a flowchart illustrating a procedure of a quantity change notification process executed by a processor of a virtual POS server according to a registration control program.
FIG. 14 is a flowchart illustrating a procedure of a settlement notification process executed by a processor of a virtual POS server according to a registration control program.
FIG. 15 is a diagram illustrating an example of a check-in screen displayed on a display of a mobile terminal.
FIG. 16 is a diagram illustrating an example of a first screen displayed on a display of a mobile terminal.
FIG. 17 is a diagram illustrating an example of a second screen displayed on a display of a mobile terminal.
FIG. 18 is a diagram illustrating an example of a screen displayed on a display of a mobile terminal.
FIG. 19 is a diagram illustrating an example of a third screen displayed on a display of a mobile terminal.
FIG. 20 is a diagram illustrating an example of a screen displayed on a display of a mobile terminal.
FIG. 21 is a diagram illustrating an example of a screen displayed on a display of a mobile terminal.
FIG. 22 is a diagram illustrating an example of a screen displayed on a display of a mobile terminal.
FIG. 23 is a diagram illustrating an example of a screen displayed on a display of a mobile terminal.
FIG. 24 is a diagram illustrating an example of an accounting screen displayed on a display of a mobile terminal.

### DETAILED DESCRIPTION

The invention is set out in the appended set of claims.

In general, according to certain embodiments, there are provided an improvement in a mobile terminal of a consumer for the performance of self-merchandise registration using the mobile terminal with respect registration of an item without a barcode attached thereto.

In one embodiment, a mobile terminal includes a processor and a camera configured to read a code symbol on an item. The processor is configured to display a first screen with a first button that causes, when selected by a user, a transition to a second screen for registering an item using the camera to read with a code symbol on the item and a second button that causes, when selected by the user, a transition to a third screen for registering an item without a code symbol, the third screen including a selectable merchandise list. The processor is further configured to output data corresponding to items registered via the second screen and the third screen to a merchandise registration processing device.

Hereinafter, non-limiting example embodiments will be described with reference to the drawings.

The present example embodiment describes a case where a consumer (customer) self-registers items to be purchased on the sales floor of a retail store, such as a supermarket, by using a mobile terminal rather than taking the items to a cash register or the like. As the possible items for sale on the sales floor, there may be items with barcodes encoding merchandise codes for identifying the items and items without such barcodes attached thereto.

### [Description of Self-merchandise Registration System]

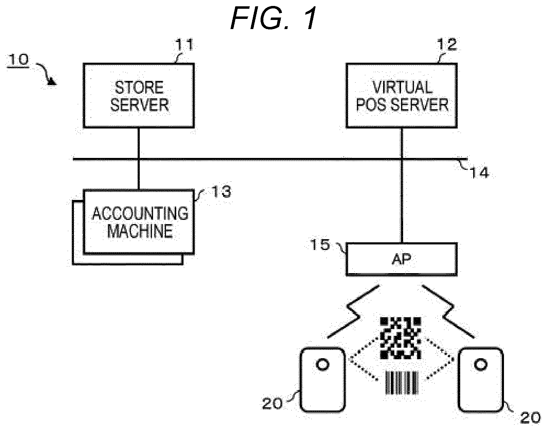

FIG. 1 is a schematic configuration diagram of a self-merchandise registration system 10 for a retail store. The self-merchandise registration system 10 is a system permitting the consumer to perform the registration of purchased items at the sales site (sales floor) by using a mobile terminal 20 by himself or by herself.

The self-merchandise registration system 10 includes a store server 11, a virtual POS server 12, and an accounting machine 13. The self-merchandise registration system 10 connects each device via a communication network 14. The communication network 14 is, for example, a local area network (LAN). The LAN may be a wired LAN or a wireless LAN. An access point 15 is connected to the communication network 14 in this example.

The access point 15 is a communication facility installed in the store as a relay base for data communication via wireless LAN. The wireless LAN conforms to, for example, the Wi-Fi^{®} standard. It is noted that, although FIG. 1 illustrates only one access point 15, the number of access points 15 is not limited to one. Two or more access points 15 may be connected to the communication network 14 in consideration of the scale, layout, and the like of the store.

The mobile terminal 20 is a portable wireless communication terminal that can be used by consumers when shopping at a store. Although the mobile terminal 20 is typically the property of the consumer (e.g., the consumer's own smartphone or the like), in some cases, the store may provide the mobile terminal 20 to the consumer. The mobile terminal 20 includes at least hardware for reading code symbols such as a two-dimensional code and a barcode. For example, a commercially available smartphone, tablet terminal, or the like equipped with a digital camera can be used as the mobile terminal 20.

The store server 11 is a computer that supports overall store operations. To support this, the store server 11 manages various databases including a merchandise database. The merchandise database is a collection of merchandise records providing data for each item of merchandise being sold in the store. The information such as a merchandise code, a classification code, a price, and a merchandise name are in the merchandise record.

The merchandise code is a unique identification code set on at least a per item type basis in order to individually identify the items of merchandise by type. Each item of merchandise usually has a barcode attached or printed thereon indicating the corresponding merchandise code. However, in some cases, some item types such as fruits, vegetables, and side dishes (prepared food items) may not have attached barcodes. In the following, an item of merchandise with a barcode attached thereto is referred to as a barcoded item-, and an item of merchandise without a barcode attached thereto is referred to as a no-barcode item.

The classification code is a unique identification code to identify the classification or type of the merchandise. The classification of the items of merchandise can be, for example, vegetables, fruits, side dishes, beverages, dairy products, meat, fresh fish, processed items, confectionery, and the like.

The virtual POS server 12 is a computer that cooperates with the mobile terminal 20 to provide functions of a standard POS terminal. For example, the virtual POS server 12 provides the following three functions. The first function is registering and processing the sales data of self-registered items of merchandise via the mobile terminal 20. The second function is generating accounting data (settlement data) based on the sales data of each item self-registered via the mobile terminal 20 and transmitting the accounting data to the store server 11. The accounting data includes the total number of sold items, total sales amount due (payment due), and the like. The third function is controlling the screen displayed on the display unit of the mobile terminal 20. The virtual POS server 12 functions as a merchandise registration processing device with the first function and the second function. The virtual POS server 12 also functions as an information processing device with the third function.

The accounting machine 13 is a terminal for settling the price of the self-registered items via the mobile terminal 20. The accounting machine 13 acquires the accounting data from the store server 11 and permits a settlement based on the accounting data. The settlement method is not particularly limited. Well-known settlement methods such as cash settlement, credit card settlement, electronic money settlement, reward point settlement, code settlement (also referred to as mobile settlement or smartphone settlement, and the like) can be used.

As such accounting machines 13, there are manned accounting machines at which a clerk inputs information for settlement and a self-accounting machine at which the consumer inputs information for settlement. The self-merchandise registration system 10 may include a mix of both manned accounting machines and self-accounting machines or may include only one type of the accounting machines. As a manned accounting machine, a well-known POS terminal in the related art can be applied. As the self-accounting machine, a well-known self-service-type or semi-self-service-type accounting machine in the related art can be applied.

It is noted that by pre-setting or otherwise providing information of a credit card in the mobile terminal 20, it is possible to settle the price of the purchased merchandise on the mobile terminal 20. In the case where such a mechanism is used, the accounting machine 13 can be excluded from the self-merchandise registration system 10.

### [Description of Mobile Terminal]

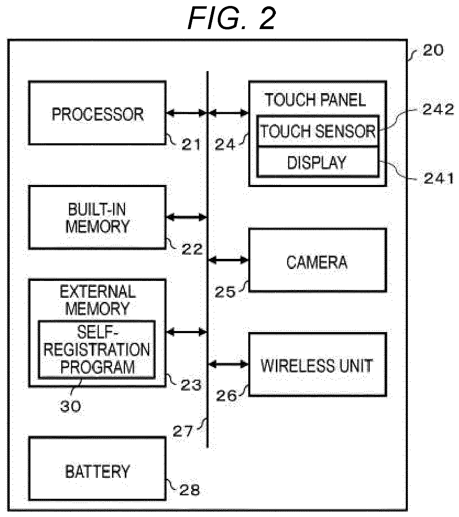

FIG. 2 is a block diagram illustrating a main circuit configuration of the mobile terminal 20. As illustrated in FIG. 2, the mobile terminal 20 includes a processor 21, a built-in memory 22, an external memory 23, a touch panel 24, a camera 25, a wireless unit 26, and a system transmission line 27. In addition, the mobile terminal 20 is equipped with a rechargeable battery 28 as a power source.

The system transmission line 27 includes an address bus, a data bus, a control signal line, and the like. The mobile terminal 20 connects the processor 21, the built-in memory 22, the external memory 23, the touch panel 24, the camera 25, and the wireless unit 26 to the system transmission line 27. In the mobile terminal 20, a computer with the processor 21, the built-in memory 22, the external memory 23, and the system transmission line 27.

The processor 21 corresponds to the central processor of a computer. The processor 21 controls components in order to realize various functions of the mobile terminal 20 according to an operating system or an application program. The processor 21 is, for example, a central processing unit (CPU).

The built-in memory 22 includes a non-volatile memory area and a volatile memory area. The built-in memory 22 stores the operating system or the application program in the non-volatile memory area. The built-in memory 22 stores data required for the processor 21 to execute a process for controlling each component in the volatile memory area. In addition, the built-in memory 22 uses the volatile memory area as a work area where data is appropriately rewritten and manipulated by the processor 21. The non-volatile memory area is, for example, a read only memory (ROM). The volatile memory area is, for example, a random access memory (RAM).

For example, an SD memory card, a USB memory, or the like can be the external memory 23. The external memory 23 stores data used by the processor 21 to perform various processes, data generated by the processes of the processor 21, and the like. In some cases, the external memory 23 may store the above-mentioned application program.

The touch panel 24 is an input device that combines a display 241 as a display unit and a touch sensor 242 as a detection unit. The display 241 includes a screen for displaying various images. The touch sensor 242 detects a position on the screen touched by the operator. The touch panel 24 acquires the data input by the operator from the position on the screen detected by the touch sensor 242 and the information of the image displayed at the position.

The camera 25 is an imaging device built into the mobile terminal 20. The camera 25 operates as an imaging device for a still image or moving image (video) or as a scanning device for code symbols such as a barcode and a two-dimensional code according to the application program installed in the mobile terminal 20. That is, the camera 25 functions as a reading unit for reading the code symbol.

The wireless unit 26 is a circuit for performing data communication with the access point 15 according to the communication protocol of the wireless LAN. That is, the wireless unit 26 functions as a transmitting unit that transmits data to each device of the self-merchandise registration system 10 connected via the access point 15 and a reception unit that receives data transmitted from each device. The transmitting unit can be referred to as an output unit.

The mobile terminal 20 is equipped with a self-registration program 30. The self-registration program 30 is the application program for realizing self-merchandise registration in a store in which the self-merchandise registration system 10 is introduced on the computer of the mobile terminal 20. The self-registration program 30 is configured to include a program ID and a program body. The program ID is unique identification information set for each program in order to individually identify the self-registration program 30 installed in each of the mobile terminals 20 of a plurality of consumers. The program ID also functions as identification information on the mobile terminal 20.

The self-registration program 30 is installed in the external memory 23. The self-registration program 30 may be installed in the built-in memory 22. The method of installing the self-registration program 30 in the built-in memory 22 or the external memory 23 is not particularly limited. The self-registration program 30 can be installed in the built-in memory 22 or the external memory 23 by recording the self-registration program 30 on a removable recording medium or distributing the self-registration program 30 by communication via a network. The recording medium may be in any form as long as the recording medium such as an SD memory card or a USB memory can store a program and the device can read the program.

### [Description of Virtual POS Server]

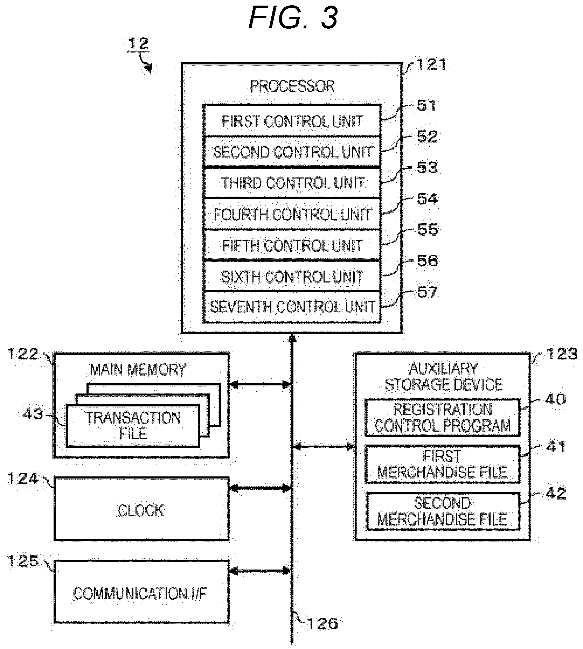

FIG. 3 is a block diagram illustrating a configuration of the virtual POS server 12. The virtual POS server 12 includes a processor 121, a main memory 122, an auxiliary storage device 123, a clock 124, a communication interface 125, and a system transmission line 126. The system transmission line 126 includes an address bus, a data bus, a control signal line, and the like. The virtual POS server 12 connects the processor 121, the main memory 122, the auxiliary storage device 123, the clock 124, and the communication interface 125 to the system transmission line 126. In the virtual POS server 12, a computer is configured with the processor 121, the main memory 122, the auxiliary storage device 123, the clock 124, the communication interface 125, and the system transmission line 126 connecting these components.

The processor 121 corresponds to the central portion of the computer. The processor 121 controls each component in order to realize various functions as the virtual POS server 12 according to the operating system or the application program. The processor 121 is, for example, a CPU.

The main memory 122 includes a non-volatile memory area and a volatile memory area. The main memory 122 stores the operating system or the application program in the non-volatile memory area. The main memory 122 stores data required for the processor 121 to execute a process for controlling each component in the volatile memory area. The above data may be stored in the non-volatile memory area. The main memory 122 uses the volatile memory area as a work area where the data is appropriately rewritten by the processor 121. The non-volatile memory area is, for example, a ROM. The volatile memory area is, for example, a RAM

The auxiliary storage device 123 corresponds to the auxiliary storage portion of the computer. For example, an EEPROM, an HDD, an SSD, and the like can be the auxiliary storage device 123. The auxiliary storage device 123 stores data used by the processor 121 to perform various processes, data generated by the processes of the processor 121, and the like. In some cases, the auxiliary storage device 123 may store the above-mentioned application program.

The clock 124 tracks the date and time. The virtual POS server 12 acquires the date and time tracked by the clock 124 as the current date and time.

The communication interface 125 is a circuit for transmitting and receiving data according to a predetermined communication protocol with each device connected via the communication network 14.

The virtual POS server 12 is equipped with the registration control program 40. The registration control program 40 is the application program (control program) for controlling the self-merchandise registration by the consumer using the mobile terminal 20 in cooperation with the self-registration program 30 installed in the mobile terminal 20.

The registration control program 40 is installed in the auxiliary storage device 123. The registration control program 40 may be installed in the main memory 122. The method of installing the registration control program 40 in the main memory 122 or the auxiliary storage device 123 is not particularly limited. The registration control program 40 is recorded on a removable recording medium or the registration control program 40 is distributed by communication via a network, and then, the registration control program 40 can be installed in the main memory 122 or the auxiliary storage device 123. The recording medium may be in any form as long as recording medium such as an SD memory card or a USB memory can store a program and the device can read the program.

In the virtual POS server 12, a first merchandise file 41 and a second merchandise file 42 as data files referred to by the registration control program 40 are provided in the auxiliary storage device 123. The first merchandise file 41 is a data file in which information/data such as a merchandise code, a classification code, a price, and a merchandise name of a barcoded item is stored. The second merchandise file 42 is a data file in which information/data such as a merchandise code, a classification code, a price, and a merchandise name of a no-barcode item is stored.

The first merchandise file 41 and the second merchandise file 42 are generated based on the merchandise records stored in the merchandise database. For example, when a merchandise record for a new item of merchandise is added to the merchandise database, if the new item of merchandise is a barcoded item, information/data is added to the first merchandise file 41, and if the new item of merchandise is a no-barcode merchandise, information/data is added to the second merchandise file 42. Similarly, when sales of an item of merchandise is stopped (e.g., a product type is retired)_the corresponding merchandise record can be deleted from the appropriate file in the merchandise database. In the case where the price of an item is changed, the price related to the item stored in the first merchandise file 41 or the second merchandise file 42 can be changed.

The virtual POS server 12 uses a portion of the volatile area in the main memory 122 as a storage area for a plurality of the transaction files 43. The transaction file 43 is a memory area for temporarily storing the data of the items registered according to the registration control program 40. A transaction file 43 is generated for each consumer who performs self-merchandise registration by using a mobile terminal 20.

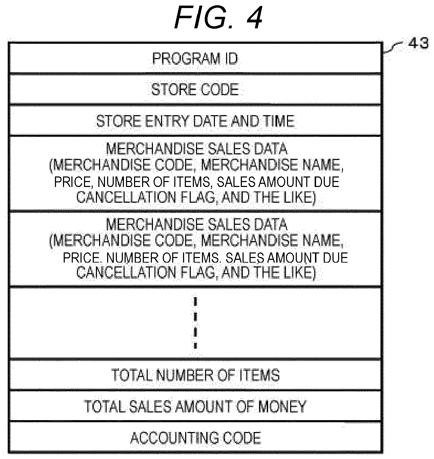

FIG. 4 is a schematic diagram illustrating a data structure stored in the transaction file 43. As illustrated in FIG. 4, data such as a program ID, a store code, a store entry date and time, at least one instance of "merchandise sales data" (that is, a record of information regarding a registered item in the transaction, which is also referred to as a merchandise sales record for each registered item), a total number of sold items, a total sales amount due, and an accounting code are stored in the transaction file 43.

The program ID is version or type identification for the self-registration program 30 presently installed on the mobile terminal 20. The store code is an identification code of the store for which the self-merchandise registration system 10 is operated. The store entry date and time is the date and time when the consumer with the mobile terminal 20 enters the store.

The merchandise sales record includes the merchandise code, merchandise name, price, number of sold items, sales amount due, cancellation flag, and the like for the items of merchandise self-registered by the consumer using the mobile terminal 20. The cancellation flag is a 1-bit data for identifying whether or not purchase of a particular item has been cancelled. In the present embodiment, the cancellation flag is set to "0" unless purchase has been cancelled, and set to "1" when a purchase of an item is cancelled.

The total number of sold items is the sum of registered items in the transaction for which purchase has not been cancelled, and the total sales amount due is the total money due for the items of merchandise for which purchase has not been cancelled. The accounting code is a unique code generated for each mobile terminal 20 from which an accounting instruction can be made. It is noted that the data stored in the transaction file 43 is not limited to the data described above.

The processor 121 of the virtual POS server 12 has functions as a first control unit 51, a second control unit 52, a third control unit 53, a fourth control unit 54, a fifth control unit 55, a sixth control unit 56, and a seventh control unit 57. The first control unit 51, the second control unit 52, the third control unit 53, the fourth control unit 54, the fifth control unit 55, the sixth control unit 56, and the seventh control unit 57 are functions realized by the registration control program 40.

The first control unit 51 has a function of displaying the first screen on the display unit of the mobile terminal 20, that is, the display 241. The first screen is a screen in which a first operator that allows the first screen to be transitioned to the second screen for registering the barcoded item by reading the barcode and a second operator that allows the first screen to be transitioned to the third screen for registering the no-barcode merchandise by selecting from the merchandise list are arranged. The first control unit 51 can be referred to as first control means.

The second control unit 52 has a function of transitioning the screen of the display 241 from the first screen to the second screen when the first operator is operated in the mobile terminal 20. The second control unit 52 can be referred to as second control means.

The third control unit 53 has a function of transitioning the screen of the display 241 from the first screen to the third screen when the second operator is operated in the mobile terminal 20. The third control unit 53 can be referred to as third control means.

The fourth control unit 54 has a function of transitioning the screen of the display 241 from the third screen to the second screen when the first operator of the third screen is operated in the mobile terminal 20. The fourth control unit 54 can be referred to as fourth control means.

The fifth control unit 55 has a function of transitioning the screen of the display 241 to the first screen displaying the name and registered quantity of the merchandise when the merchandise is registered on the mobile terminal 20 via the second screen or the third screen. The fifth control unit 55 can be referred to as fifth control means.

The sixth control unit 56 has a function of receiving a change in the registered quantity displayed on the first screen of the mobile terminal 20 and executing a quantity change process.

The seventh control unit 57 has a function of executing an accounting process when the third operator for instructing the accounting displayed on the first screen of the mobile terminal 20 is operated. It is noted that the functions of the processor 21 are not limited to just the functions of the first control unit 51 to the seventh control unit 57.

### [Description of Operation of Self-Registration System]

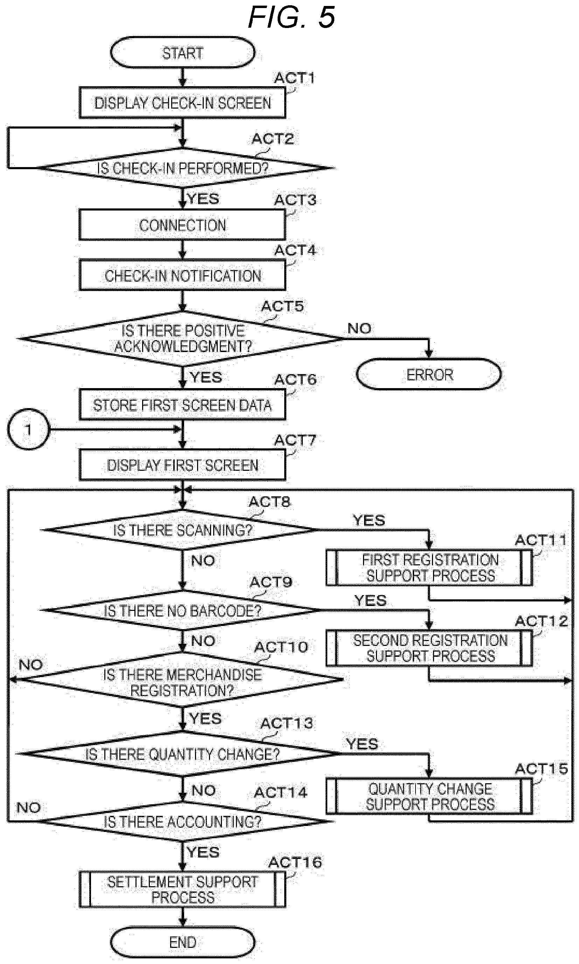

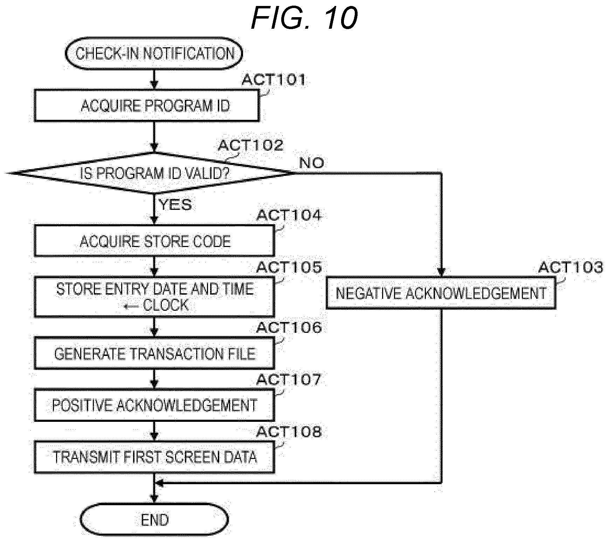

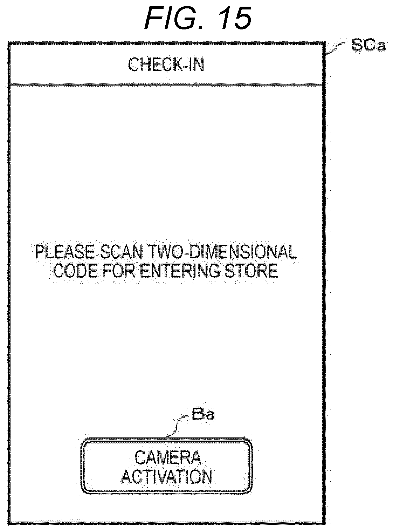

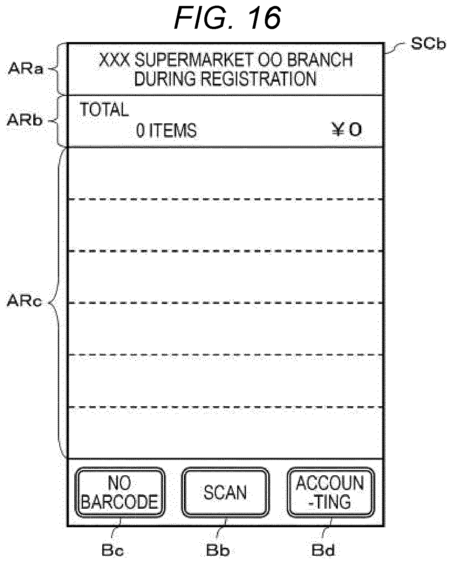

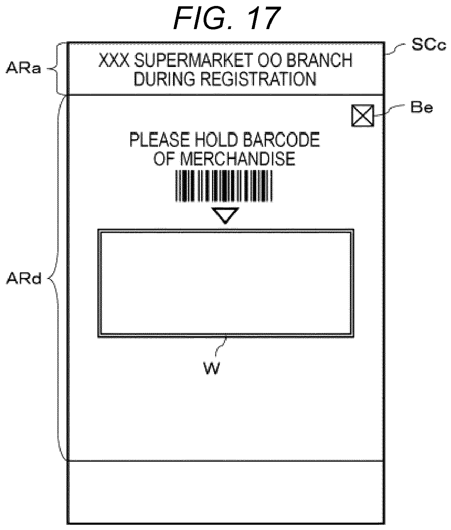

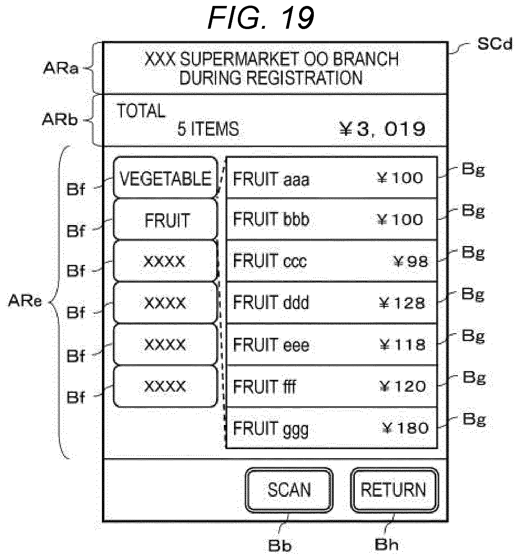

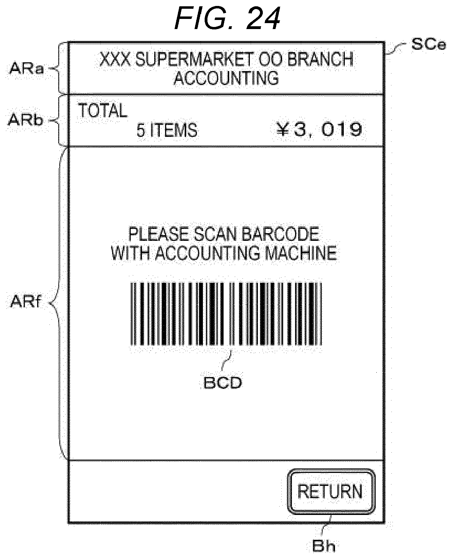

FIGS. 5 to 9 are flowcharts illustrating aspects of an information processing procedure executed by the processor 21 of the mobile terminal 20 according to the self-registration program 30. FIGS. 10 to 14 are flowcharts illustrating aspects of an information processing procedure executed by the processor 121 of the virtual POS server 12 according to the registration control program 40. FIGS. 15 to 24 are screen examples displayed on the display 241 of the mobile terminal 20. Specifically, FIG. 15 is an example of the check-in screen SCa. FIG. 16, FIG. 18, and FIGS. 20 to 23 are examples of the first screen SCb. FIG. 17 is an example of the second screen SCc. FIG. 19 is an example of the third screen SCd. FIG. 24 is an example of the accounting screen SCe.

Aspects of operations of the self-merchandise registration system 10 will be described with reference to FIGS. 5 to 24. It is noted that the procedures of the information processing illustrated by each flowchart are not limited thereto. When the same effect can be obtained, the procedures and/or steps can be changed, modified, omitted, or combined as appropriate. The screen examples are non-limiting. The layout, images, text, and the like of the screens SCa to SCe are not limited to those illustrated.

First, a schematic operation starting from entering the store and ending with an accounting will be described with reference to FIGS. 5, 10, 15, and 16.

A consumer goes to a store where the self-merchandise registration system 10 is provided first activates the self-registration program 30 on the mobile terminal 20. When the self-registration program 30 is activated, the processor 21 of the mobile terminal 20 starts the process illustrated in FIG. 5. The processor 21 allows the display 241 to display the check-in screen SCa (refer to FIG. 15) in ACT1.

FIG. 15 is an example of the check-in screen SCa. A two-dimensional code for entering the store is prepared at the entrance of the store. The two-dimensional code is a code of setting information related to a store in a predetermined two-dimensional code system. The setting information includes a store code, in-store LAN data, mobile communication data, and the like. The in-store LAN data is SSID, password, security information, and the like required for the mobile terminal 20 to connect to the access point 15 by using the wireless LAN. The mobile communication data is a timeout time, the number of retries, and the like required for the mobile terminal 20 to communicate with each device of the self-merchandise registration system 10.

As illustrated in FIG. 15, a camera activation button Ba together with a guidance for guiding the scanning of the two-dimensional code for entering the store is displayed on the check-in screen SCa. The camera start button Ba is a soft button for instructing the activation of the camera 25. A soft button can be referred to as a soft key, a software-implemented interface button, a button, an icon, a graphical user interface (GUI) key, or the like. The consumer confirming the check-in screen SCa selects the camera activation button Ba. Then, the camera 25 is activated, and thus, the consumer scans the two-dimensional code for entering the store with the camera 25.

The processor 21 displaying the check-in screen SCa waits for check-in in ACT2. When the two-dimensional code for entering the store is scanned with the camera 25, the processor 21 determines that the check-in is performed. The processor 21 proceeds to ACT3 from ACT2. The processor 21 is connected to the access point 15 by wireless LAN based on the in-store LAN data of the setting information coded two-dimensionally in ACT3. Then, when the processor 21 is connected to the access point 15, the processor 21 controls the wireless unit 26 to notify the virtual POS server 12 of the check-in in ACT4.

By this control, the check-in notification command is wirelessly transmitted via the wireless unit 26. The check-in notification command is received by the access point 15 and transmitted to the virtual POS server 12 through the communication network 14. The check-in notification command includes the program ID of the self-registration program 30. The check-in notification command also includes the store code acquired from the two-dimensional code for entering the store. The virtual POS server 12 that receives the check-in notification command executes the check-in notification process.

FIG. 10 is a flowchart illustrating a main procedure of the check-in notification process. When the processor 121 of the virtual POS server 12 receives the check-in notification command via the communication interface 125, the processor 121 acquires the program ID from the check-in notification command in ACT101. Then, the processor 121 checks whether or not the program ID is a valid ID.

For example, the store server 11 stores the program ID of the self-registration program installed by the consumer who makes an illegal transaction. The processor 121 checks whether or not the program ID acquired from the check-in notification command matches the program ID stored in the store server 11. If the programs ID match, the processor 121 proceeds to ACT103 from ACT102. The processor 121 transmits a negative acknowledgement command in ACT103 to the mobile terminal 20.

On the other hand, if the programs ID do not match, the processor 121 proceeds to ACT104 from ACT102. The processor 121 acquires the store ID from the check-in notification command in ACT104. The processor 121 uses the current date and time in ACT105 which is tracked by the clock 124 as the store entry date and time. Then, the processor 121 generates the transaction file 43 on the main memory 122 in ACT106. The program ID and store code acquired from the check-in notification command and the store entry date and time are stored in the transaction file 43.

In ACT107, the processor 121 transmits a positive acknowledgment command to the mobile terminal 20 sending the check-in notification command. Next, the processor 121 transmits the data of the first screen SCb to the mobile terminal 20 in ACT108. The data of the first screen SCb is data for displaying the first screen SCb on the display 241 of the mobile terminal 20. The data of the first screen SCb is generated based on a data of the screen layout prepared in advance and a data (store code, merchandise sales records, total number of sold items, and total sales amount due) of the transaction file 43 with the program ID that was included in the check-in notification command. The processor 121 then ends the information processing.

In this manner, when the consumer scans the two-dimensional code for entering the store with the camera 25 of the mobile terminal 20, the mobile terminal 20 transmits the check-in notification command to the virtual POS server 12. In response to the check-in notification command, the virtual POS server 12 generates a transaction file 43 specifically for the consumer who uses the mobile terminal 20. In addition, the positive acknowledgment command is transmitted from the virtual POS server 12 to the mobile terminal 20 together with the data of the first screen SCb.

FIG. 5 is referred back to for description.

The processor 21 (mobile terminal 20) that sends the check-in notification waits for either a positive or negative acknowledgement command from the virtual POS server 12 in ACT5. If the negative acknowledgement command is received, the processor 21 terminates the process as a check-in error.

On the other hand, if the positive acknowledgment command is received, the processor 21 proceeds to ACT6 from ACT5. In ACT 6, processor 21 stores the data of the first screen SCb received with or following the positive acknowledgment command in an image memory. The image memory is, for example, a portion of the storage area of the built-in memory 22. The processor 21 causes the display 241 to display the first screen SCb (refer to FIG. 16) based on the data in the image memory in ACT7.

FIG. 16 is an example of the first screen SCb. As illustrated in FIG. 16, the first screen SCb has a store name area ARa, a total area ARb, and a plurality of specification areas ARc. In the store name area ARa, the name of the store identified by the store code set in the two-dimensional codes for entering the store is displayed. The total number of sold items and the total sales amount due are displayed in the total area ARb. The plurality of specification areas ARc are currently blank. In addition, a scan button Bb, a no-barcode button Bc, and an accounting button Bd are displayed on the first screen SCb. The scan button Bb is a soft button operated by the consumer in the case of performing self-registration of the barcoded item. The scan button Bb is an example of the first operator. The no-barcode button Bc is a soft button operated by the consumer in the case of performing self-registration of the no-barcode merchandise. The no-barcode button Bc is an example of the second operator. The accounting button Bd is a soft button operated by the consumer in the case of transitioning to the accounting for self-registered purchased items. The accounting button Bd is an example of a third operator.

The consumer confirming the first screen SCb starts shopping. Then, in the case where the purchased merchandise is a barcoded item, the consumer selects the scan button Bb. In the case where the purchased merchandise is a no-barcode item, the consumer selects the no-barcode button Bc. In the case of terminating the shopping, the consumer selects the accounting button Bd.

The processor 21 displaying the first screen SCb checks whether or not the scan button Bb is selected in ACT8. When the scan button Bb is not selected, the processor 21 proceeds to ACT9 from ACT8. The processor 21 checks whether or not the no-barcode button Bc is selected in ACT9. If the no-barcode button Bc is not selected, the processor 21 proceeds to ACT10 from ACT9. The processor 21 checks whether or not the purchased item is registered in ACT10. When the purchased item is not registered, the processor 21 returns to ACT8 from ACT10. In this manner, the processor 21 waits for either the scan button Bb or the no-barcode button Bc to be selected until a purchased item is registered.

In this waiting state, when the processor 21 detects that the scan button Bb is selected, the processor 21 proceeds to ACT11 from ACT8. The processor 21 executes the first registration support process in ACT11. The first registration support process is a process of supporting the registration of a purchased item, which is a barcoded item, in cooperation with the processor 121 of the virtual POS server 12. When the first registration support process is ended, the processor 21 returns to waiting for selection of the scan button Bb or the no-barcode button Bc.

In this waiting state, when the processor 21 detects that the no-barcode button Bc is selected, the processor 21 proceeds to ACT12 from ACT9. The processor 21 executes the second registration support process in ACT12. The second registration support process is a process of supporting the registration of the purchased item, which is a no-barcode item, in cooperation with the processor 121 of the virtual POS server 12. When the second registration support process is ended, the processor 21 returns to waiting for selection of the scan button Bb or the no-barcode button Bc.

When the first registration support process or the second registration support process is executed, the purchased item is registered. Therefore, the processor 21 proceeds to ACT13 from ACT10. The processor 21 checks whether or not a quantity change is instructed in ACT13. If no quantity change is instructed, the processor 21 proceeds to ACT14 from ACT13. The processor 21 checks whether or not an accounting is instructed in ACT14. When the accounting button Bd of the first screen SCb is selected, the processor 21 determines that an accounting is instructed. If accounting is not instructed, the processor 21 returns to ACT8 from ACT14. In this manner, after the purchased item is registered, the processor 21 waits for the scan button Bb, the no-barcode button Bc, or the accounting button Bd on the first screen SCb to be selected or for the quantity change to be instructed.

If the scan button Bb is selected in this waiting state, the processor 21 executes the first registration support process. If the no-barcode button Bc is selected, the processor 21 executes the second registration support process.

If a quantity change is instructed, the processor 21 proceeds to ACT15 from ACT13. The processor 21 executes the quantity change support process in ACT15. The quantity change support process is a process of supporting the change of the registered quantity in cooperation with the processor 121 of the virtual POS server 12. When the quantity change support process is ended, the processor 21 returns back to waiting for the scan button Bb, the no-barcode button Bc, or the accounting button Bd to be selected, or otherwise for another quantity change instruction.

When the processor 21 detects that the accounting button Bd is selected, the processor 21 proceeds to ACT16 from ACT14. The processor 21 executes the settlement support process in ACT16. The settlement support process is a process of supporting the settlement of the registered purchased item in cooperation with the processor 121 of the virtual POS server 12. When the settlement support process is ended, the processor 21 ends the information processing of the procedure illustrated in the flowchart of FIG. 5.

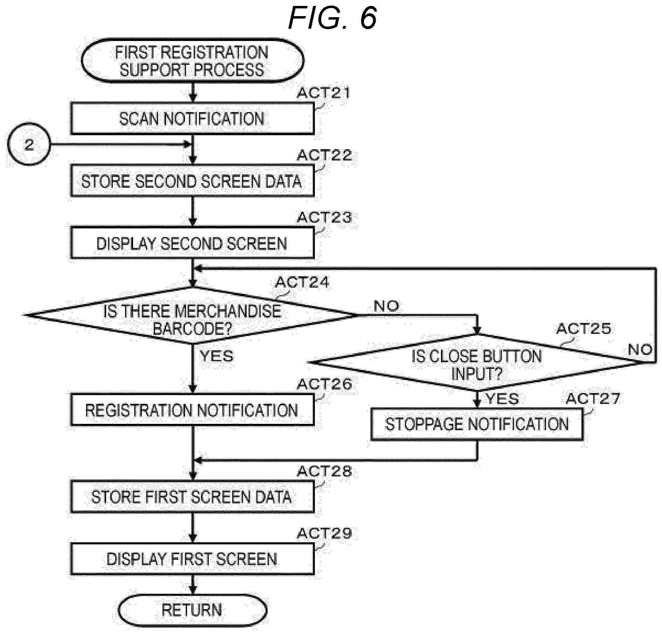

Next, the operation of the self-merchandise registration system 10 when the consumer self-registers a barcoded item will be described with reference to FIGS. 6, 11, 17, and 18.

As described above, in the case where the purchased merchandise is a barcoded item, the consumer selects the scan button Bb displayed on the first screen SCb. Then, the processor 21 of the mobile terminal 20 starts the first registration support process.

FIG. 6 is a flowchart illustrating a main procedure of the first registration support process. When the processor 21 starts the first registration support process, the processor 21 controls the wireless unit 26 to notify the virtual POS server 12 of a scanning in ACT21. By this control, the scanning notification command is wirelessly transmitted via the wireless unit 26. The scanning notification command is received by the access point 15 and transmitted to the virtual POS server 12 through the communication network 14. The scanning notification command includes the program ID of the self-registration program 30. The virtual POS server 12 executes the scanning notification process after receiving the scanning notification command.

Since the data of the second screen SCc is transmitted from the virtual POS server 12 by the scanning notification process, the processor 21 stores the data of the second screen SCc in the image memory in ACT22. Then, the processor 21 allows the display 241 to display the second screen SCc (refer to FIG. 17) based on the data in the image memory in ACT23.

FIG. 17 is an example of the second screen SCc. As illustrated, the second screen SCc has a reading guide area ARd together with the store name area ARa. In the reading guide area ARd, a window W illustrating a reading range of the barcode is displayed together with guidance instructing the reading of the barcode. The stoppage button Be is also displayed.

In this manner, when the consumer selects the scan button Bb of the first screen SCb, the screen of the display 241 is transitioned from the first screen SCb to the second screen SCc. The consumer confirming the second screen SCc holds the camera 25 of the mobile terminal 20 over the purchased item so that the barcode attached to the item enters the window W. Then, the barcode is scanned with the camera 25. For stopping the scan, the consumer selects the stoppage button Be.

The processor 21 displaying the second screen checks whether or not the barcode of the purchased merchandise is scanned in ACT24. If the barcode is not scanned, the processor 21 proceeds to ACT25 from ACT24. The processor 21 checks whether or not the stoppage button Be is selected in ACT25. If the stoppage button Be is not selected, the processor 21 returns to ACT24. In this manner, the processor 21 displaying the second screen waits for the barcode of an item to be scanned or the stoppage button Be to be selected.

In this waiting state, when a barcode is scanned with the camera 25, the processor 21 proceeds from ACT24 to ACT26. The processor 21 controls the wireless unit 26 to notify the registration in ACT26. By this control, the registration notification command is wirelessly transmitted via the wireless unit 26. The registration notification command is received by the access point 15 and transmitted to the virtual POS server 12 through the communication network 14. The registration notification command includes the scanned barcode data as well as the program ID of the self-registration program 30.

If the stoppage button Be is selected in the same waiting state, the processor 21 proceeds from ACT25 to ACT27. The processor 21 controls the wireless unit 26 to perform the stoppage notification in ACT27. By this control, the stoppage notification command is wirelessly transmitted via the wireless unit 26. The stoppage notification command is received by the access point 15 and transmitted to the virtual POS server 12 through the communication network 14. The stoppage notification command includes the program ID of the self-registration program 30.

When the virtual POS server 12 executing the scanning notification process receives the registration notification command or the stoppage notification command, the data of the first screen SCb is transmitted from the virtual POS server 12 to the mobile terminal 20. The processor 21 of the mobile terminal 20 transmitting the registration notification command or the stoppage notification command stores the data of the first screen SCb in ACT28 in the image memory. Then, the processor 21 allows the display 241 to display the first screen SCb based on the data in the image memory in ACT29.

With the above, the processor 21 ends the first registration support process.

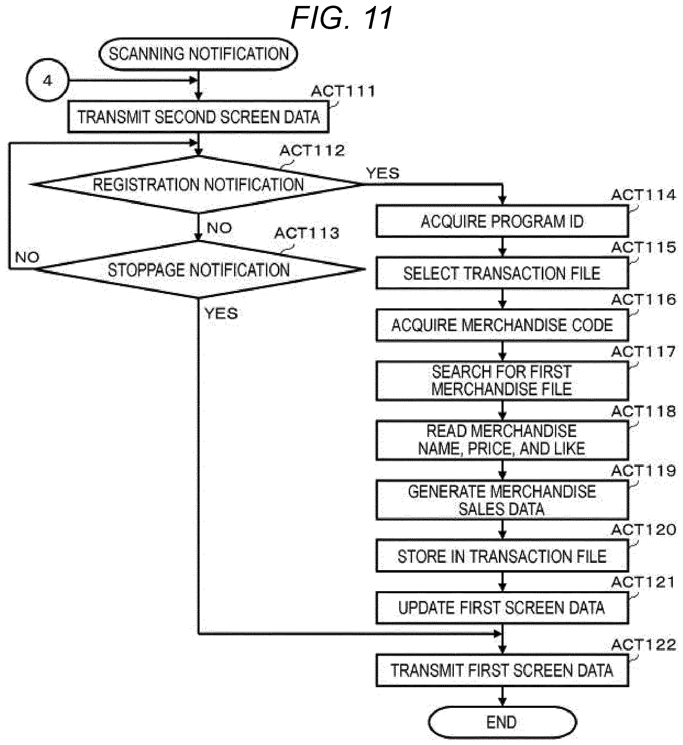

FIG. 11 is a flowchart illustrating a scanning notification process executed by the processor 121 of the virtual POS server 12. When receiving the scanning notification command from the mobile terminal 20, the processor 121 starts the process illustrated in the flowchart of FIG. 11. First, in ACT111, the processor 121 transmits the data of the second screen SCc to the mobile terminal 20 sending the scanning notification command. The data of the second screen SCc is generated based on the layout data prepared in advance and the data (store code) of the transaction file 43 with the program ID included in the scanning notification command.

The processor 121 transmitting the data of the second screen SCc conforms whether or not the registration notification command is received in ACT112. If the registration notification command is not received, the processor 121 proceeds from ACT112 to ACT113. The processor 121 checks whether or not the stoppage notification command is received in ACT113. If the stoppage notification command is not received, the processor 121 returns to ACT112 from ACT113. In this manner, the processor 121 waits for receiving the registration notification command or receiving the stoppage notification command.

When the stoppage notification command is received in the same waiting state, the processor 121 proceeds to ACT122 from ACT113. In ACT122, the processor 121 transmits the data of the first screen SCb to the mobile terminal 20 sending the stoppage notification command.

In this manner, since the consumer who selects the scan button Bb to register the barcoded item stops the registration of the barcoded item, when the stoppage button Be of the second screen SCc is selected, the screen of the display 241 is transitioned from the second screen SCc to the first screen SCb. The first screen SCb at this time is the same as the first screen SCb before being transitioned to the second screen SCc.

If the registration notification command is received, the processor 121 proceeds to ACT114 from ACT112. The processor 121 acquires the program ID from the registration notification command in ACT114. Then, the processor 121 selects the particular transaction file 43 with the program ID in ACT115.

In addition, the processor 121 acquires the merchandise code from the barcode data included in the registration notification command in ACT116. Then, the processor 121 searches for the first merchandise file 41 by the merchandise code in ACT117. The processor 121 reads the merchandise name, price, and the like stored in association with the merchandise code from the first merchandise file 41 in ACT118. The processor 121 generates a merchandise sales record in ACT119. The merchandise sales record includes the merchandise code, merchandise name, price, number of sold items, sales amount due, cancellation flag, and the like. The number of sold items is "1" initially. The sales amount due is the price of each item sold multiplied by the number of sold items of each type. The cancellation flag is "0" indicating no cancellation.

In ACT120, the processor 121 stores the merchandise sales record in the transaction file 43 selected in ACT115. Then, the processor 121 updates the data of the first screen SCb based on the data of the transaction file 43, in ACT121. That is, the processor 121 updates the merchandise sales records stored in the transaction file 43, that is, the merchandise name, the number of sold items, and the sales amount due of the barcoded item so as to be displayed in the specification area ARc of the first screen SCb. In addition, the processor 121 updates the data so that the total number of items and the total sales amount due are displayed in the total area ARb. In ACT122, the processor 121 transmits the data of the first screen SCb to the mobile terminal 20 sending the registration notification command.

In this manner, when the consumer scans the barcode by using the camera 25 of the mobile terminal 20, the data of the purchased item of merchandise is stored in the transaction file 43 of the consumer on the virtual POS server 12. That is, the merchandise sales record for the barcoded item is registered. In addition, the screen of the display 241 is transitioned from the second screen SCc to the first screen SCb. The first screen SCb at this time becomes a screen updated with the information for the purchased merchandise.

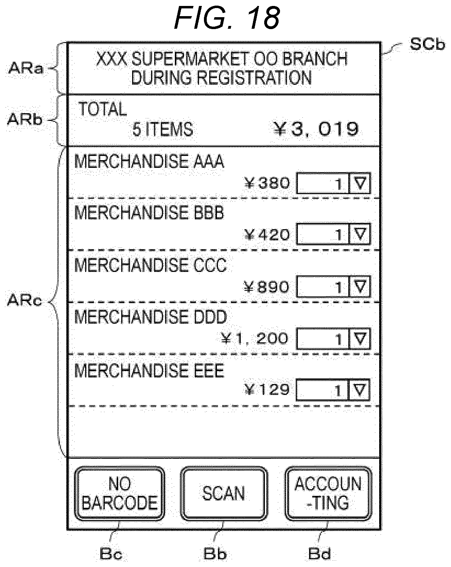

FIG. 18 is an example of the first screen SCb after the merchandise sales records for five items have been registered. As illustrated, the merchandise name, the sales amount due, and the number of sold items for each item type are displayed in the specification area ARc on the first screen SCb. The number of sold items can be displayed in a pull-down box. The use of a pull-down box will be described below. The total number of sold items and the total sales amount due for the five items are displayed in the total area ARb on the first screen SCb.

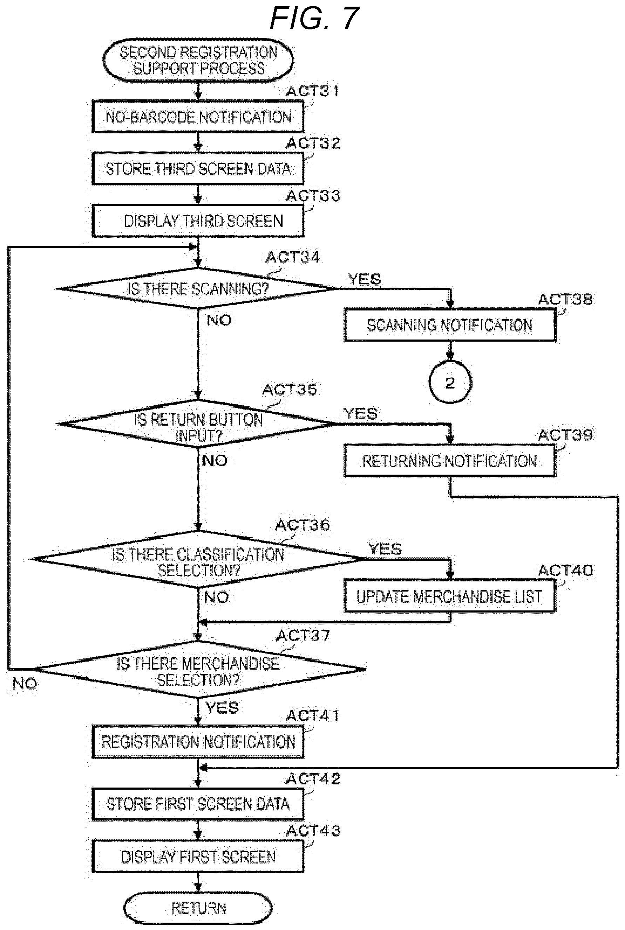

Next, the operation of the self-merchandise registration system 10 when the consumer self-registers a no-barcode item of merchandise will be described with reference to FIGS. 7, 12, 18, and 19.

As described above, If the purchased merchandise is a no-barcode item, the consumer selects the no-barcode button Bc displayed on the first screen SCb. Then, the processor 21 of the mobile terminal 20 starts the second registration support process.

FIG. 7 is a flowchart illustrating the second registration support process. When the second registration support process is started, the processor 21 controls the wireless unit 26 to notify the virtual POS server 12 of no-barcode in ACT31. By this control, the no-barcode notification command is wirelessly transmitted via the wireless unit 26. The no-barcode notification command is received by the access point 15 and transmitted to the virtual POS server 12 through the communication network 14. The no-barcode notification command includes the program ID of the self-registration program 30. The no-barcode notification process is executed on the virtual POS server 12 after receiving the no-barcode notification command.

Since the data of the third screen SCd is transmitted from the virtual POS server 12 by the no-barcode notification process, the processor 21 stores the data of the third screen SCd in the image memory in ACT32. Then, the processor 21 allows the display 241 to display the third screen SCd (refer to FIG. 19) based on the data in the image memory in ACT33.

FIG. 19 is an example of the third screen SCd. As illustrated, the third screen SCd has a list area ARe of no-barcode items together with a store name area ARa and a total area ARb. A plurality of the classification buttons Bf and a plurality of merchandise buttons Bg to which merchandise codes of items belonging to the classification of the selected classification button Bf are assigned are displayed in the list area ARe. In addition, the scan button Bb and the return button Bh are displayed. The classification of the items including the no-barcode item is displayed in each classification button Bf. The merchandise name and price of the no-barcode item are displayed in the merchandise button Bg. It is noted that the information displayed in the merchandise button Bg is not limited to the merchandise name and price. FIG. 19 is an example of a screen when fruits are selected as the classification.

In this manner, when the consumer selects the no-barcode button Bc on the first screen SCb, the screen of the display 241 is transitioned from the first screen SCb to the third screen SCd. The consumer confirming the third screen SCd operates the touch panel 24 so as to select the classification button Bf to which the purchased item belongs and then to select the merchandise button Bg in which the merchandise name for the purchased item is displayed. By doing so, the merchandise code assigned to the selected merchandise button Bg is captured by the processor 21. A consumer noticing that a barcode is attached to the item can select the scan button Bb. In the case of stopping the registration of a no-barcode item, the consumer selects the return button Bh.

The processor 21 displaying the third screen SCd checks whether or not the scan button Bb is selected in ACT34. If the scan button Bb is not selected, the processor 21 proceeds from ACT34 to ACT35. The processor 21 checks whether or not the return button Bh is selected in ACT35. If the return button Bh is not selected, the processor 21 proceeds from ACT35 to ACT36. The processor 21 checks whether or not the classification button Bf is selected in ACT36. If the classification button Bf is not selected, the processor 21 proceeds to ACT37 from ACT36. The processor 21 checks whether or not the merchandise button Bg is selected in ACT37. If the merchandise button Bg is not selected, the processor 21 returns to ACT34. In this manner, the processor 21 displaying the third screen SCd waits for any one of the scan button Bb, the return button Bh, the classification button Bf, and the merchandise button Bg to be selected.

When it is detected that the scan button Bb is selected in this waiting state, the processor 21 proceeds from ACT34 to ACT38. The processor 21 controls the wireless unit 26 to notify the virtual POS server 12 of the scanning notification in ACT38. By this control, as described above, the scanning notification command is wirelessly transmitted via the wireless unit 26. The virtual POS server 12 receiving the scanning notification command executes the scanning notification process described with reference to FIG. 11. Therefore, the processor 21 proceeds to ACT22 of FIG. 6 and executes the processes of ACT22 to ACT29 in the same manner as described above.

If the return button Bh is selected, the processor 21 proceeds from ACT35 to ACT39. The processor 21 controls the wireless unit 26 to perform a return notification in ACT39. By this control, the return notification command is wirelessly transmitted via the wireless unit 26. The return notification command is received by the access point 15 and transmitted to the virtual POS server 12 through the communication network 14. The program ID of the self-registration program 30 is included in the return notification command.

When the return notification command is received by the virtual POS server 12 during the execution of the no-barcode notification process, the data of the first screen SCb is transmitted from the virtual POS server 12. Therefore, the processor 21 performing the return notification stores the data of the first screen SCb in the image memory in ACT42. Then, the processor 21 allows the display 241 to display the first screen SCb based on the data in the image memory in ACT43.

If any one of the classification buttons Bf is selected, the processor 21 proceeds to ACT40 from ACT36. The processor 21 updates the merchandise button Bg so that the merchandise code of the items belonging to the classification of the selected classification button Bf is assigned to each merchandise button Bg based on the data of the third screen SCd in ACT40. Then, the processor 21 returns to the same waiting state.

If any one of the merchandise buttons Bg is selected, the processor 21 proceeds to ACT41 from ACT37. The processor 21 controls the wireless unit 26 to perform the registration notification in ACT41. By this control, the registration notification command is wirelessly transmitted via the wireless unit 26. The registration notification command is received by the access point 15 and transmitted to the virtual POS server 12 through the communication network 14. The merchandise code assigned to the selected merchandise button Bg together with the program ID of the self-registration program 30 is also included in the registration notification command.

When the virtual POS server 12 executing the no-barcode notification process receives the registration notification command, the data of the first screen SCb is transmitted from the virtual POS server 12. Therefore, the processor 21 performing the registration notification stores the data of the first screen SCb in the image memory in ACT42. Then, the processor 21 allows the display 241 to display the first screen SCb based on the data in the image memory in ACT43.

With the above, the processor 21 ends the second registration support process.

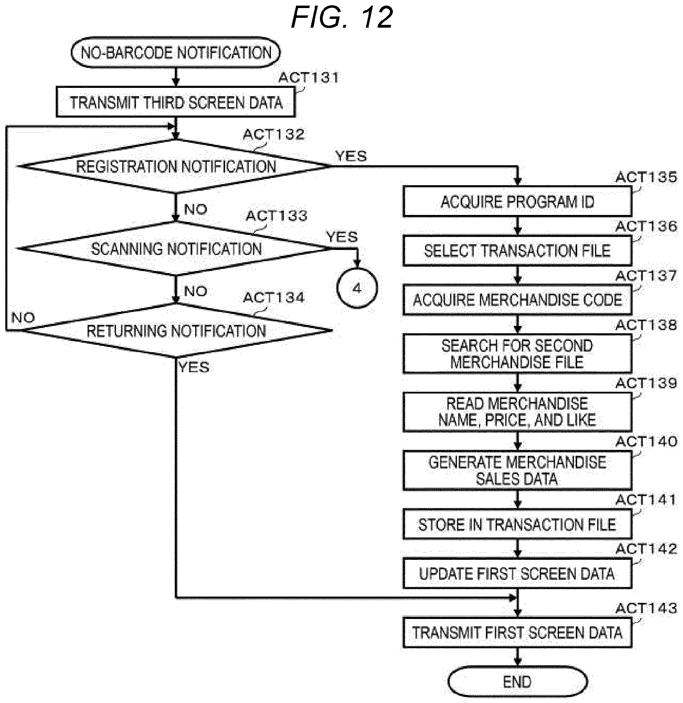

FIG. 12 is a flowchart illustrating a no-barcode notification process executed by the processor 121 of the virtual POS server 12. When receiving the no-barcode notification command from the mobile terminal 20, the processor 121 starts the procedure illustrated in the flowchart of FIG. 12. First, in ACT131, the processor 121 transmits the data of the third screen SCd to the mobile terminal 20 sending the no-barcode notification command. The data of the third screen SCd is generated based on the preset layout data (prepared in advance) and the data stored in the second merchandise file 42. Specifically, the classification name of a classification code in the second merchandise file 42 is assigned to each classification button Bf. If any one of the classification buttons Bf is selected, the merchandise names and prices of the items belonging to the selected classification are assigned to each merchandise button Bg. Therefore, the classification button Bf and the merchandise button Bg for the no-barcode items displayed on the third screen SCd differ depending on the store for which the self-merchandise registration system 10 is provided.

The processor 121 transmitting the data of the third screen SCd checks whether or not the registration notification command is received in ACT132. If the registration notification command is not received, the processor 121 proceeds to ACT133 from ACT132. The processor 121 checks whether or not the scanning notification command is received in ACT133. If the scanning notification command is not received, the processor 121 proceeds to ACT134 from ACT133. The processor 121 checks whether or not the return notification command is received in ACT134. If the return notification command is not received, the processor 121 returns to ACT132 from ACT134. In this manner, the processor 121 waits for the registration notification command, the scanning notification command, or the return notification command.

When receiving the scanning notification command in this waiting state, the processor 121 proceeds from ACT133 to ACT11 1 of FIG. 11. Then, the processor 121 executes the processes of ACT111 to ACT122 in the same manner as described above.

In this manner, when the consumer who selects the no-barcode button Bc in order to register a no-barcode item later recognizes that a barcode is actually attached to the item and selects the scan button Bb in the third screen SCd, the screen of the display 241 is transitioned from the third screen SCd to the second screen SCc. Therefore, the consumer can quickly register the barcoded item by using the mobile terminal 20.

In the case of receiving the return notification command in the same waiting state, the processor 121 proceeds to ACT143 from ACT134. In ACT143, the processor 121 transmits the data of the first screen SCb to the mobile terminal 20 sending the return notification command.

In this manner, since the consumer who selects the no-barcode button Bc in order to register the no-barcode item cancels the registration of the no-barcode item, when the consumer selects the return button Bh in the third screen SCd, the screen of the display 241 is transitioned from the third screen SCd to the first screen SCb. The first screen SCb at this time is the same as the first screen SCb before being transitioned to the third screen SCd.

In the case of receiving the registration notification command in the same waiting state, the processor 121 proceeds to ACT135 from ACT132. The processor 121 acquires the program ID from the registration notification command in ACT135. Then, the processor 121 selects the transaction file 43 in which the program ID is stored in ACT136.

In addition, the processor 121 acquires the merchandise code from the registration notification command in ACT137. Then, the processor 121 searches for the second merchandise file 42 by the merchandise code in ACT138. The processor 121 reads the merchandise name, price, and the like stored in association with the merchandise code from the second merchandise file 42 in ACT139. The processor 121 generates the merchandise sales record in ACT140. The merchandise sales record includes the merchandise code, merchandise name, price, number of sold items, sales amount due, cancellation flag, and the like. The number of sold items is "1". The sales amount due is the price of each item multiplied by the number of sold items of each type. The cancellation flag is "0" indicating no cancellation.

The processor 121 stores the merchandise sales record in ACT141 in the transaction file 43 selected in ACT136. Then, the processor 121 updates the data of the first screen SCb based on the data of the transaction file 43 in ACT142. That is, the processor 121 updates the transaction file 43, that is, the merchandise name, number of sold items, and the sales amount due of the no-barcode item to be displayed in the specification area ARc of the first screen SCb. In addition, the processor 121 updates the data so that the updated total number of sold items and the total sales amount due can be displayed in the total area ARb. In ACT143, the processor 121 transmits the data of the first screen SCb to the mobile terminal 20 sending the registration notification command.

In this manner, when the consumer selects the purchased merchandise from the list of no-barcode items displayed on the display 241 of the mobile terminal 20, the merchandise sales record for the purchased item is stored in the consumer's assigned transaction file 43 on the virtual POS server 12. That is, the merchandise sales record of the no-barcode item is registered. In addition, the screen of the display 241 is transitioned from the third screen SCd to the first screen SCb. As illustrated in FIG. 18, the first screen SCb can be repeatedly updated to reflect the purchased merchandise after each update of the transaction file 43.

That is, the merchandise sales records of the no-barcode items that are also self-registered together with the merchandise sales records of the barcoded items that the consumer self-registers are also displayed on the first screen SCb. In addition, the running totals for the total number of sold items and total sales amount due for barcoded items and no-barcode items are also displayed. Therefore, regardless of whether or not the merchandise is a barcoded item, the consumer confirming the first screen SCb operates the mobile terminal 20 to self-register the purchased merchandise, and thus, it is possible to recognize different items that have been registered, the total number of sold items, and total sales amount due.

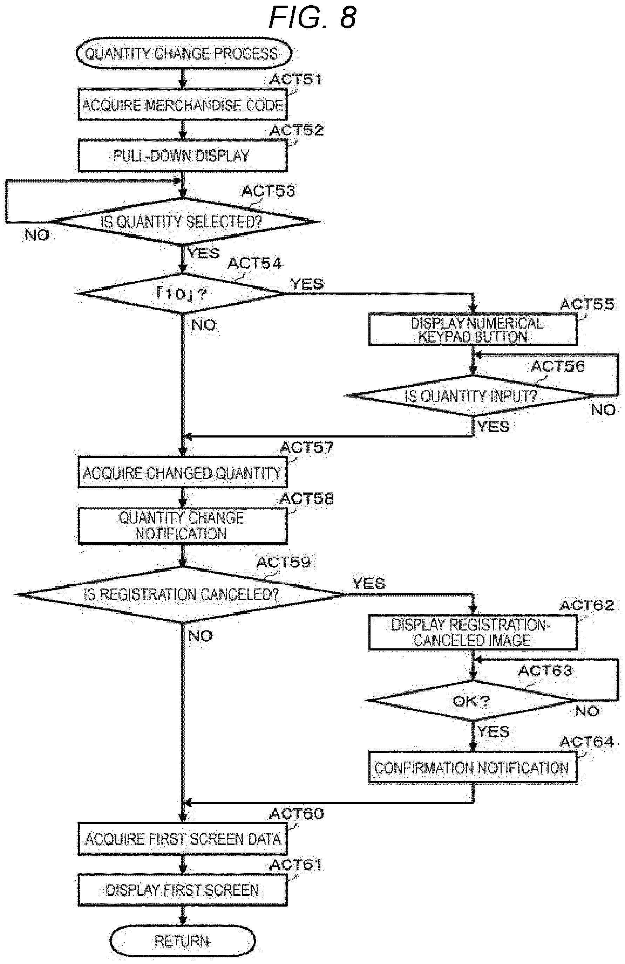

Next, the operation of the self-merchandise registration system 10 when the consumer changes the number of sold items of the registered items will be described with reference to FIGS. 8, 13, 20 to 23. It is noted that a change in the number of sold items includes an increasing the number when the same item type is added and a decreasing the number when the item is cancelled or returned.

As described above, in the specification area ARc of the first screen SCb, the number of sold items is displayed together with the merchandise name and the sales amount due for the registered merchandise. And the number of sold items is displayed in the pull-down box. In the case of changing the number of sold items of the registered merchandise, the consumer selects the pull-down box for the number of sold items, which are displayed together with the merchandise name of the item.

When the pull-down box is selected, the processor 21 of the mobile terminal 20 recognizes that the quantity change is instructed. The processor 21 determines YES in ACT 13 of FIG. 5, and starts the quantity change support process in ACT15.

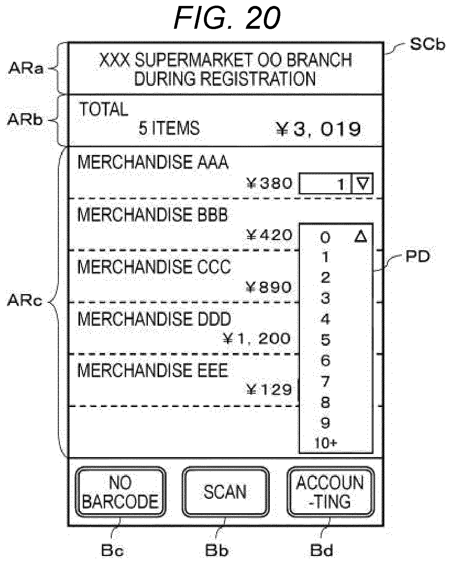

FIG. 8 is a flowchart illustrating a quantity change support process. The processor 21 acquires the merchandise code of the merchandise sales record displayed in the specification area ARc of the pull-down box in which the quantity change is specified in ACT51. In addition, the processor 21 displays the pull-down menu PD (refer to FIG. 20) in the pull-down box in which the quantity change is specified in ACT52.

FIG. 20 is a screen example when the pull-down box of the number of sold items displayed together with the merchandise name of the item BBB is selected on the first screen SCb of FIG. 18. As illustrated, a pull-down menu PD of numerical values from zero ("0") to ten ("10") is displayed in the selected pull-down box.

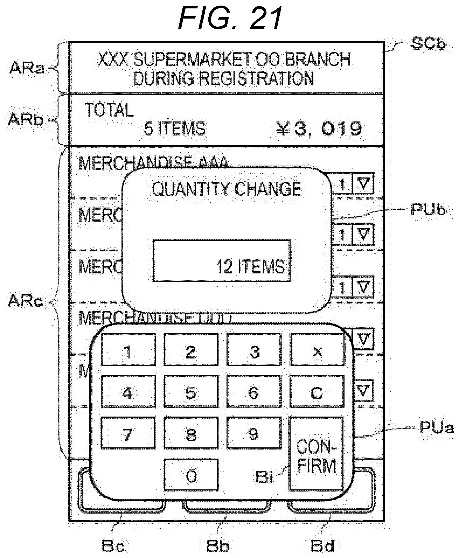

The consumer selects the changed quantity of the item BBB from the pull-down menu PD. For example, for purchasing two of item BBB, the consumer selects "2". For example, in the case of returning all items BBB, the consumer selects "0". If the number of items is set to "10" or more, the consumer selects "10". Then, as illustrated in FIG. 21, the numerical keypad button PUa and the change quantity box PUb are displayed in a pop-up manner, and the consumer operates the numerical keypad button PUa to input the number of sold items. Since the input number of sold items is displayed in the change quantity box PUb, the consumer selects the confirmation button Bi included in the numerical keypad button PUa.

That is, the processor 21 displaying the pull-down menu PD in ACT52 waits for the quantity to be selected from the pull-down menu PD in ACT53. When the quantity is selected, the processor 21 proceeds to ACT54. The processor 21 checks whether or not "10" is selected in ACT54. If the selected numerical value is any numerical value from "0" to "9", the processor 21 proceeds to ACT57 from ACT54. The processor 21 acquires the numerical value selected in ACT57 as the after-change quantity N.

On the other hand, if "10" is selected, the processor 21 proceeds to ACT55 from ACT54. The processor 21 displays a numerical keypad button PUa in ACT55. Then, the processor 21 waits for a numerical value to be input via the numerical keypad button PUa in ACT56. When the numerical value is input, the processor 21 proceeds to ACT57 from ACT56. The processor 21 acquires the numerical value selected in ACT57 as the after-change quantity N.

When the process of ACT57 is ended, the processor 21 controls the wireless unit 26 to perform the quantity change notification in ACT58. By this control, the quantity change notification command is wirelessly transmitted via the wireless unit 26. The quantity change notification command is received by the access point 15 and transmitted to the virtual POS server 12 through the communication network 14. The quantity change notification command includes the program ID of the self-registration program 30. In addition, the merchandise code acquired in ACT51 and the after-change quantity N acquired in ACT57 are also included in the quantity change notification command. The virtual POS server 12 executes the quantity change notification process after receiving the quantity change notification command.

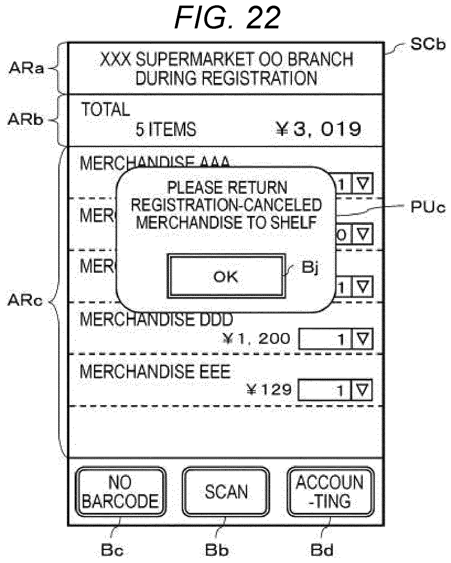

By the quantity change notification process, the data of the first screen SCb after the quantity change is transmitted from the virtual POS server 12. However, when the after-change quantity N is smaller than the before-change quantity M, the registration cancellation image PUc (refer to FIG. 22) is transmitted from the virtual POS server 12 to the front of the data on the first screen SCb.

The processor 21 checks whether or not the registration cancellation image PUc is received in ACT59. If the data of the first screen SCb is received without receiving the registration cancellation image PUc, the processor 21 proceeds to ACT60 from ACT59. The processor 21 stores the data of the first screen SCb in ACT60 in the image memory. Then, the processor 21 allows the display 241 to display the first screen SCb based on the data in the image memory in ACT61.

On the other hand, when the registration cancellation image PUc is received, the processor 21 proceeds to ACT62 from ACT59. The processor 21 displays the registration cancellation image PUc on the first screen SCb in a pop-up manner in ACT62.

FIG. 22 is a screen example in which the registration cancellation image PUc is displayed on the first screen SCb in a pop-up manner. As illustrated, the OK button Bj together with a message instructing the user to return the registration-canceled merchandise to the shelf is displayed in the registration cancellation image PUc. The consumer confirming the registration cancellation image PUc then returns the item(s) to be returned to the shelf and selects the OK button Bj.

The processor 21 displaying the registration cancellation image PUc in a pop-up manner waits for the OK button Bj to be selected in ACT63. When the OK button Bj is selected, the processor 21 proceeds to ACT64. The processor 21 controls the wireless unit 26 to perform the confirmation notification in ACT64. By this control, the confirmation notification command is wirelessly transmitted via the wireless unit 26. The confirmation notification command is received by the access point 15 and transmitted to the virtual POS server 12 through the communication network 14. The confirmation notification command includes the program ID of the self-registration program 30. The data of the first screen SCb is transmitted from the virtual POS server 12 receives the confirmation notification command.

The processor 21 transmitting the confirmation notification command proceeds to ACT60. The processor 21 stores the data of the first screen SCb in the image memory in ACT60. Then, the processor 21 allows the display 241 to display the first screen SCb based on the data in the image memory in ACT61.

With the above, the processor 21 ends the quantity change process.

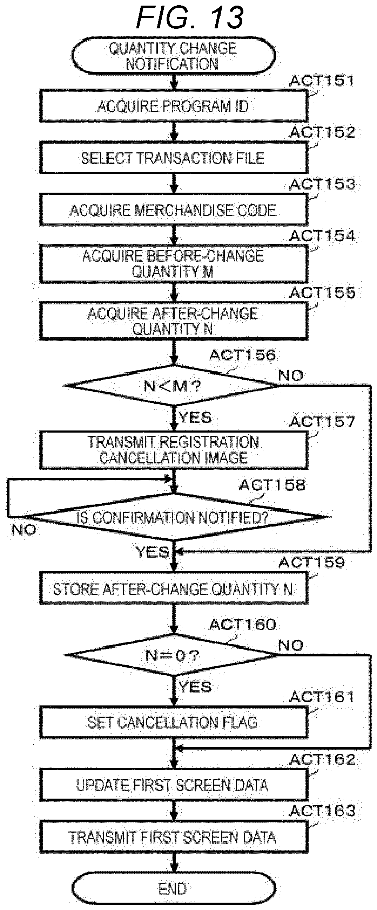

FIG. 13 is a flowchart illustrating a quantity change notification process executed by the processor 121 of the virtual POS server 12. When receiving the quantity change notification command from the mobile terminal 20, the processor 121 starts the procedure illustrated in the flowchart of FIG. 13.

The processor 121 acquires the program ID from the quantity change notification command in ACT151. Then, the processor 121 selects the transaction file 43 in which the program ID is stored in ACT152.

The processor 121 acquires the merchandise code from the quantity change notification command in ACT153. Then, the processor 121 acquires the number of sold items in the merchandise sales record including the merchandise code as the before-change quantity M from the merchandise sales record stored in the transaction file 43 selected in ACT154.

The processor 121 acquires the after-change quantity N from the quantity change notification command in ACT155. Then, the processor 121 compares the before-change quantity M with the after-change quantity N in ACT156. As a result, when the after-change quantity N is smaller than the before-change quantity M, the processor 121 proceeds to ACT157 from ACT156. The processor 121 transmits the data of the registration cancellation image to the appropriate mobile terminal 20 in ACT157. The data of the registration cancellation image is set in the main memory 122 or the auxiliary storage device 123. The processor 121 waits for the confirmation notification command in ACT158. When receiving the confirmation notification command, the processor 121 proceeds to ACT159. On the other hand, when the after-change quantity N is equal to or larger than the before-change quantity M, the processor 121 proceeds to ACT159 from ACT156. That is, the processor 121 skips the processes of ACT157 and ACT158.

In ACT159, the processor 121 changes the number of sold items in the merchandise sales record from the before-change quantity M to the after-change quantity N. The processor 121 checks whether or not the after-change quantity N is "0" in ACT160. If the after-change quantity N is "0", the processor 121 proceeds to ACT161 from ACT160. The processor 121 changes the cancellation flag to "1" in ACT161 for the merchandise sales record for which the after-change quantity N becomes "0". If the after-change quantity N is not "0", the processor 121 proceeds to ACT162 from ACT160. That is, the processor 121 skips the process of ACT161.

The processor 121 updates the data on the first screen SCb in ACT162. That is, the processor 121 controls so that the merchandise name, the number of sold items, and the sales amount due for the merchandise sales records stored in the transaction file 43 are displayed in the specification area ARc of the first screen SCb. In addition, the processor 121 controls so that a cancellation line is placed on the merchandise name and the sales amount due for the merchandise sales record in which the cancellation flag is changed to "1". In ACT163, the processor 121 transmits the data of the first screen SCb to the mobile terminal 20 sending the registration notification command.

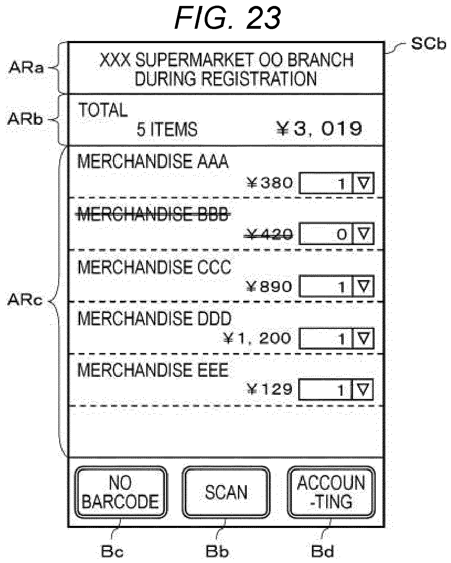

FIG. 23 is an example of the first screen SCb after the number of sold items for the item BBB is changed to "0". As illustrated, a cancellation line is displayed on the merchandise name and the sales amount due for the item BBB is changed to "0". Therefore, the consumer can recognize that the registration of the item BBB was stopped before the settlement.

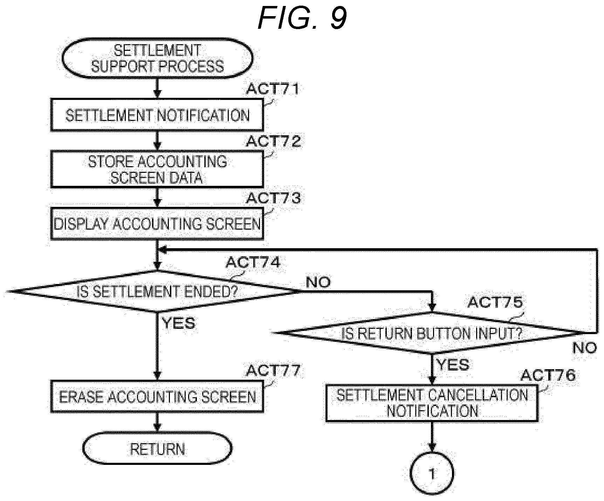

Next, the operation of the self-merchandise registration system 10 when the consumer settles the price of the purchased merchandise will be described with reference to FIGS. 9, 14 and 24.

As described above, in the case of transitioning to the accounting of the self-registered purchased items, the consumer selects the accounting button Bd displayed on the first screen SCb. Then, the processor 21 of the mobile terminal 20 starts the settlement support process.

FIG. 9 is a flowchart illustrating the settlement support process. When the processor 21 starts the settlement support process, the processor 21 controls the wireless unit 26 in ACT71 to notify the virtual POS server 12 of the settlement. By this control, the settlement notification command is wirelessly transmitted via the wireless unit 26. The settlement notification command is received by the access point 15 and transmitted to the virtual POS server 12 through the communication network 14. The settlement notification command includes the program ID of the self-registration program 30. The virtual POS server 12 executes the settlement notification process after receiving the settlement notification command.

Since the data of the accounting screen SCe is transmitted from the virtual POS server 12 by the settlement notification process, the processor 21 stores the data of the accounting screen SCe in the image memory in ACT72. Then, the processor 21 allows the display 241 to display the accounting screen SCe (refer to FIG. 24) based on the data in the image memory in ACT73.

FIG. 24 is an example of the accounting screen SCe. As illustrated, the accounting barcode BCD is displayed on the accounting screen SCe. In addition, the return button Bh is displayed on the accounting screen SCe.

The consumer confirming the accounting screen SCe goes to the place where the accounting machine 13 is installed. At this time, if the accounting machine 13 is a manned accounting machine, the consumer presents the accounting barcode BCD on the accounting screen SCe to the clerk. The clerk scans the accounting barcode BCD with the scanner of the accounting machine 13. On the other hand, if the accounting machine 13 is a self-accounting machine, the consumer scans the accounting barcode BCD by himself or by herself with the scanner of the accounting machine 13. In the case of stopping the accounting, the consumer selects the return button Bh.

When the accounting barcode BCD is scanned with the scanner of the accounting machine 13, the accounting machine 13 executes the settlement process based on the data of the transaction file 43 specified by the accounting barcode BCD. In addition, a settlement end command is transmitted from the virtual POS server 12 to the mobile terminal 20.

The processor 21 displaying the accounting screen SCe checks whether or not the settlement end command is received in ACT74. If the settlement end command is not received, the processor 21 proceeds to ACT75 from ACT74. The processor 21 checks whether or not the return button Bh is selected in ACT75. If the return button Bh is not selected, the processor 21 returns to ACT74. In this manner, the processor 21 waits for either the settlement end command to be received or the return button Bh to be selected.

In this waiting state, if the return button Bh is selected, the processor 21 proceeds to ACT76 from ACT75. The processor 21 controls the wireless unit 26 to perform the accounting cancellation notification in ACT76. By this control, the accounting cancellation notification command is wirelessly transmitted via the wireless unit 26. The accounting cancellation notification command is received by the access point 15 and transmitted to the virtual POS server 12 through the communication network 14. The accounting cancellation notification command includes the program ID of the self-registration program 30.

If the settlement end command is received, the processor 21 proceeds to ACT77 from ACT74. The processor 21 erases the accounting screen SCe in ACT77. With the above, the processor 21 ends the information process according to the self-registration program 30.

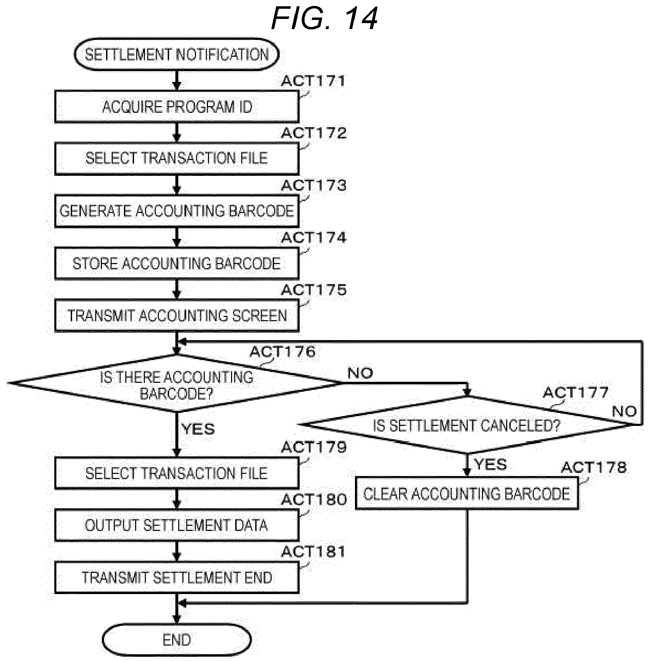

FIG. 14 is a flowchart illustrating a main procedure of the accounting notification process executed by the processor 121 of the virtual POS server 12. When receiving the accounting notification command from the mobile terminal 20, the processor 121 starts the procedure illustrated in the flowchart of FIG. 14.

The processor 121 acquires the program ID from the accounting notification command in ACT171. Then, the processor 121 selects the transaction file 43 in which the program ID is stored in ACT172. The processor 121 generates a unique accounting barcode BCD in ACT173. Then, the processor 121 stores the data of the accounting barcode BCD in the selected transaction file 43 in ACT174.

In ACT175, processor 121 transmits the data of the accounting screen SCe including the accounting barcode BCD to the mobile terminal 20 sending the accounting notification command. Then, the processor 121 checks whether or not the data of the accounting barcode BCD is received from the accounting machine 13 in ACT176. If the data of the accounting barcode BCD is not received, the processor 121 proceeds to ACT177 from ACT176. The processor 121 checks whether or not the accounting cancellation notification command is received from the mobile terminal 20 in ACT177. If the accounting cancellation notification command is not received, the processor 121 returns to ACT176 from ACT177. In this manner, the processor 121 waits for either the receiving of the data of the accounting barcode BCD or the receiving of the accounting cancellation notification command.

As described above, when the consumer selects the return button Bh of the accounting screen SCe, the accounting cancellation notification command is transmitted from the mobile terminal 20 to the virtual POS server 12. When confirming that the processor 121 receives the accounting cancellation notification command, the processor 121 proceeds to ACT178 from ACT177. In ACT178, the processor 121 clears the data of the accounting barcode BCD stored in the transaction file 43 by the process of ACT174.

In addition, as described above, when the accounting barcode BCD is scanned with the scanner of the accounting machine 13, the data of the accounting barcode BCD is transmitted from the accounting machine 13 to the virtual POS server 12. When receiving the data of the accounting barcode BCD, the processor 121 proceeds to ACT179 from ACT176. In ACT179, the processor 121 selects the transaction file 43 in which the data of the accounting barcode BCD is stored. Then, the processor 121 edits the settlement data from the merchandise sales data stored in the transaction file 43 and the total data of the total number of sold items and the total sales amount due and transmits the settlement data to the accounting machine 13 transmitting the data of the accounting barcode BCD in ACT180. In ACT181, the processor 121 transmits a settlement end command to the mobile terminal 20 sending the accounting notification command transmission.

### [Description of Function and Effect of Self-Merchandise Registration System]

As described in detail above, when the consumer who is the operator selects the scan button Bb of the first screen SCb, the mobile terminal 20 transitions the first screen SCb to the second screen SCc corresponding to the registration of the barcoded item. In this state, when the consumer scans the barcode of the barcoded item with the camera 25, the virtual POS server 12 registers the merchandise sales record of the barcoded item. In addition, when the consumer selects the no-barcode button Bc on the first screen SCb, the first screen SCb is transitioned to the third screen SCd corresponding to the registration of the no-barcode item. In this state, when the consumer selects one of the classification button Bf or the merchandise button Bg on the third screen SCd to specify the no-barcode item, the virtual POS server 12 registers the merchandise sales record of the no-barcode item. That is, it is possible to register the no-barcode item without inputting the merchandise code for the no-barcode item via the numerical keypad.

Therefore, according to the present embodiment, it is possible to provide the mobile terminal 20 capable of correctly self-registering not only a barcoded item but also a no-barcode item by a simple operation. Then, the screen transition as described above is realized by the third function of the virtual POS server 12. Therefore, it is possible to provide the virtual POS server 12 (information processing device) that can control the screen of the mobile terminal 20 so that not only the barcoded item but also the no-barcode item can be correctly self-registered by a simple operation.

In addition, in the mobile terminal 20, when the consumer selects the scan button Bb of the third screen SCd, the third screen SCd is transitioned to the second screen SCc. Therefore, in the case where the consumer tries to register an apparent no-barcode item but then subsequently recognizes that a barcode is attached to the item, a registration of the barcoded item can be performed by a simple operation.

In addition, when an item is registered via the second screen SCc or the third screen SCd, the mobile terminal 20 is transitioned to the first screen SCb displaying the name and registered quantity of the item. Therefore, the consumer can easily know the data of the self-registered purchased items by operating the mobile terminal 20 regardless of whether or not the items are each a barcoded item. For this reason, on the first screen SCb, the merchandise sales record of the barcoded items and the merchandise sales record of the no-barcode items may be displayed in an identifiable manner (distinguished manner). By doing so, the consumer can easily identify whether the information displayed on the first screen SCb is for barcoded items or no-barcode items.

On the first screen SCb, the number of sold items in each merchandise sales record is displayed in a pull-down box. When the consumer operates the pull-down box and selects a desired numerical value from the pull-down menu, the number of items can be changed to the selected numerical value. For a numerical value of 10 or more, the consumer selects "10+" from the pull-down menu, which causes the numerical keypad button PUa to be displayed. The consumer then inputs a desired numerical value with 2 or more digits. Then, the number of items in merchandise sales record is changed to the input numerical value.

As described above, according to the present embodiment, the number of registered items can be changed by a simple operation.

### [Modification Example]

In the above-described embodiment, the virtual POS server 12 has been described as having the third function of controlling the screen displayed on the display unit of the mobile terminal 20. The information processing device having the third function is not limited to the virtual POS server 12. For example, the store server 11 may have a third function. Alternatively, a server specialized for performance of the third function may be one aspect of the information processing device.

Although a barcode is supposed to be scanned with the camera 25 of the mobile terminal 20, in some instances the barcode may be dirty or marred and thus, may not be scannable. Therefore, a manual input button is displayed on the second screen SCc. If the manual input button is selected, the processor 21 displays the numerical keypad button PUa illustrated in FIG. 21 and accepts the manual input of the merchandise code. By adding such a configuration, even when the camera 25 cannot scan the barcode, the barcoded item can be self-registered.

In the above-described embodiment, the mobile terminal 20 used by the consumer accesses the virtual POS server 12 of the self-merchandise registration system 10 via the access point 15. However, in the case where the virtual POS server 12 is a cloud-based server or the like that provides services such as cloud computing, the mobile terminal 20 may access the virtual POS server 12 via an external line, for example, an Internet line rather than via an access point 15.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A mobile terminal, comprising:
a camera configured to read a code symbol on an item; and
a processor configured to:
display a first screen with a first button that causes, when selected by a user, a transition to a second screen for registering an item using the camera to read with a code symbol on the item and a second button that causes, when selected by the user, a transition to a third screen for registering an item without a code symbol, the third screen including a selectable merchandise list; and
output data corresponding to items registered via the second screen and the third screen to a merchandise registration processing device.

2. The mobile terminal according to claim 1, wherein a third button is on the third screen, and
the processor is further configured to cause a transition to the second screen from the third screen when the user selects the third button.

3. The mobile terminal according to claim 1 or 2, wherein
the processor is further configured to cause a transition to the first screen after an item is registered via either one of the second or third screens, the first screen displaying a list of registered items.

4. The mobile terminal according to claim 3, wherein the list of registered items displays items registered via the second screen in a manner distinct from items registered via the third screen.

5. The mobile terminal according to claim 3 or 4, wherein each registered item type on the list of registered items is displayed next to a quantity change operator by which a user can change a corresponding number of items for the registered item type.

6. The mobile terminal according to claim 5, wherein the processor is further configured to output information indicating the change in the corresponding number of items for the registered item type to the merchandise registration processing device.

7. The mobile terminal according to any one of claims 1 to 6, wherein the first screen includes a fourth button for requesting an accounting operation when selected by the user.

8. A server device, comprising:
an interface connectable to a mobile terminal; and
a processor configured to:
cause a display of a first screen on the mobile terminal, the first screen including a first button to cause, when selected by a user, a transition to a second screen for registering an item using a camera of the mobile terminal to read with a code symbol on the item and a second button to cause, when selected by the user, a transition to a third screen for registering an item without a code symbol, the third screen including a selectable merchandise list,
cause a transition from the first screen to the second screen when the first button is selected by the user, and
cause a transition from the first screen to the third screen when the second button is selected by the user.

9. The server device according to claim 8, wherein
a third button is on the third screen, and
the processor is further configured to cause a transition to the second screen from the third screen when the user selects the third button.

10. The server device according to claim 8 or 9, wherein
the processor is further configured to cause a transition to the first screen after an item is registered via either one of the second or third screens, the first screen displaying a list of registered items.

11. The server device according to claim 10, wherein the list of registered items displays items registered via the second screen in a manner distinct from items registered via the third screen.

12. The server device according to any one of claims 8 to 11, wherein
the first screen includes a fourth button for requesting an accounting operation when selected by the user, and
the processor is further configured to perform the accounting operation based on the list of registered items if the fourth button is selected.

13. A non-transitory computer readable medium storing program instructions which when executed by a mobile terminal cause the mobile terminal to perform a method comprising:
displaying a first screen with a first button that causes, when selected by a user, a transition to a second screen for registering an item using the camera to read with a code symbol on the item and a second button that causes, when selected by the user, a transition to a third screen for registering an item without a code symbol, the third screen including a selectable merchandise list; and
outputting data corresponding to items registered via the second screen and the third screen to a merchandise registration processing device.

14. The non-transitory computer readable medium according to claim 13, the method further comprising:
causing a transition directly to the second screen from the third screen when the user selects a third button displayed on the third screen.

15. The non-transitory computer readable medium according to claim 13 or 14, the method further comprising:
causing a transition to the first screen after an item is registered via either one of the second or third screens.
